(19) Europäisches Patentamt
European Patent Office
Office européen des brevets

(11) **EP 2 399 312 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **10722289.5**

(22) Anmeldetag: **21.01.2010**

(51) Int Cl.:
*H01M 4/92* (2006.01)        *H01M 4/86* (2006.01)
*H01M 4/88* (2006.01)

(86) Internationale Anmeldenummer:
**PCT/DE2010/000058**

(87) Internationale Veröffentlichungsnummer:
**WO 2010/094251 (26.08.2010 Gazette 2010/34)**

(54) **KATALYSATORSCHICHT FÜR DEN EINSATZ IN EINER BRENNSTOFFZELLE SOWIE VERFAHREN ZU DEREN HERSTELLUNG**

CATALYST LAYER FOR USE IN A FUEL CELL, AND METHOD FOR THE PRODUCTION THEREOF

COUCHE DE CATALYSEUR À UTILISER DANS UNE PILE À COMBUSTIBLE ET SON PROCÉDÉ DE RÉALISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.02.2009 DE 102009009246**

(43) Veröffentlichungstag der Anmeldung:
**28.12.2011 Patentblatt 2011/52**

(73) Patentinhaber: **Forschungszentrum Jülich GmbH 52425 Jülich (DE)**

(72) Erfinder: **KULIKOVSKY, Andrei 52385 Nideggen (DE)**

(56) Entgegenhaltungen:
**US-A- 5 882 810        US-A1- 2002 068 213
US-A1- 2009 029 235**

**Beschreibung**

Die Erfindung betrifft eine Katalysatorschicht, die in Brennstoffzellen eingesetzt werden kann, insbesondere in Polymer-Elektrolytmembran (PEM)-Brennstoffzellen mit einem festen Polymer als Elektrolyten. Die Erfindung betrifft ferner die Herstellung einer solchen vorteilhaften Katalysatorschicht.

Stand der Technik

Brennstoffzellen sind in der Lage einen Brennstoff und ein Oxidationsmittel örtlich voneinander getrennt an zwei Elektroden in Strom, Wärme und Wasser umzuwandeln. Als Brennstoff kann reiner Wasserstoff oder ein wasserstoffreiches Gas, oder auch eine wässrige Alkohollösung, als Oxidationsmittel in der Regel Sauerstoff oder Luft dienen. Der Vorgang der Energieumwandlung in der Brennstoffzelle zeichnet sich durch einen besonders hohen Wirkungsgrad aus.

Die so genannten Polymer-Elektrolytmembran-Brennstoffzellen (PEM-Brennstoffzelle) weisen eine kompakte Bauweise, eine effektive Leistungsdichte sowie einen hohen Wirkungsgrad auf. Damit sind sie insbesondere für den Einsatz als Energiewandler in Kraftfahrzeugen geeignet. Zur Erzielung einer höheren Spannung wird eine Vielzahl von einzelnen Brennstoffzellen in so genannten Brennstoffzellenstapeln zusammen angeordnet.

Ein PEM-Brennstoffzellenstapel besteht in der Regel aus einer stapelweisen Anordnung von Membran-Elektroden-Einheiten (MEA = Membrane Electrode Assembly). Eine Membran-Elektroden-Einheit besteht aus einer Polymer-Elektrolyt-Membran, die auf beiden Seiten mit Katalysatorschichten versehen ist. Die Polymer-Elektrolyt-Membran besteht aus Protonen leitenden Polymermaterialien, die im Folgenden auch kurz als Ionomer bezeichnet werden. Bevorzugt wird ein Tetrafluorethylen-Fluorvinylether-Copolymer mit Säurefunktionen, insbesondere Sulfonsäuregruppen, verwendet, welches zum Beispiel unter dem Handelsnamen Nafion™ vertrieben wird.

Von den an die PEM angrenzenden zwei Katalysatorschichten dient eine als Anode für die Oxidation von Wasserstoff und die andere als Kathode für die Reduktion von Sauerstoff. Auf die Katalysatorschichten werden so genannte Gasverteilerstrukturen aus Kohlefaserpapier oder Kohlevlies aufgebracht, die durch ihre hohe Porosität von bis zu 75 % einen guten Zugang der Reaktionsgase zu den Katalysatorschichten und eine gute Ableitung des Zellenstroms ermöglichen.

Die beiden Katalysatorschichten einer Membran-Elektroden-Einheit umfassen in der Regel Elektrokatalysatoren, die die jeweilige Reaktion (Oxidation von Wasserstoff beziehungsweise Reduktion von Sauerstoff) katalytisch unterstützen. Als dafür besonders geeignet haben sich die Metalle der Platingruppe des Periodensystems der Elemente herausgestellt, insbesondere Pt oder Pt-Ru. Häufig werden die Elektrokatalysatoren nicht rein, sondern als geträgerte Katalysatoren eingesetzt, das bedeutet, dass die katalytisch aktiven Platingruppenmetalle in hochdisperser Form auf die Oberfläche eines leitfähigen Trägermaterials aufgebracht sind. Die mittlere Partikelgröße der Metalle liegt dabei zwischen 1 und 10 nm. Als Trägermaterialien haben sich feinteilige Ruße bewährt. Abhängig vom Einsatzgebiet können Anoden- und Kathodenschichten gleichartig aufgebaut sein oder unterschiedliche Elektrokatalysatoren enthalten.

Die beiden von einer Membran getrennten Elektroden setzen sich aus einer Katalysatorschicht und einer Elektronen leitenden porösen Gasdiffusionsschicht (GDL) zusammen. Die Herstellung dieser Elektroden kann auf unterschiedliche Arten erfolgen: Zum einen durch die Beschichtung der Gasdiffusionsschicht, zum anderen über eine direkte Beschichtung der Membran. Ersteres wird als Gasdiffusionselektrode bzw. GDE, letzteres als Catalyst Coated Membrane bzw. CCM bezeichnet. Das Auftragen des Katalysators erfolgt über verschiedene Techniken, zum Beispiel durch Drucken auf Substrat, der Membran oder der Gasdiffusionsschicht.

Zwischen den einzelnen Membran-Elektrodeneinheiten eines Brennstoffzellenstapels sorgen bipolare Platten für die Gaszufuhr der Reaktionsgase und die Stromleitung zwischen den Einzelzellen.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig, die zum großen Teil durch die benötigten Platingruppenmetalle verursacht werden. Da der Elektrokatalysator einen wichtigen Kostenfaktor bei der Herstellung eines Brennstoffzellenstapels darstellt, ist es notwendig, den Katalysator möglichst effektiv einzusetzen. Ziel ist es daher, eine Katalysatorschicht mit einer möglichst geringen Belegung an Katalysator zu entwickeln, die dennoch eine optimale Aktivität in den so genannten Dreiphasenzonen entwickelt, in denen die trägerfixierten, katalytisch aktiven Edelmetallpartikel, der Polymerelektrolyt und das Reaktionsgas in direktem Kontakt stehen.

Die US 4,876,115 beschreibt ein Verfahren zur Behandlung einer porösen Gasdiffusionselektrode, welche eine Katalysatorbeladung mit auf Kohlenstoffpartikeln aufgebrachtem Platin von weniger als 0,5 mg Pt/cm$^2$ aufweist. Die Elektrode wird mit einer Lösung eines Ionomers imprägniert. Hierdurch werden die Oberflächen der Kohlenstoffpartikel mit dem Ionomer beschichtet.

In der US 5,234,777 wird eine Membran-Elektroden-Einheit aus einer Polymer-Elektrolyt-Membran und beidseitigen Katalysatorschichten und porösen Gasverteilerstrukturen vorgeschlagen. Die Katalysatorschichten bestehen aus einem Platinkatalysator (Platin auf einem Kohlenstoffträger) und einem Protonen leitenden Ionomer. Die Dicke der Katalysatorschichten beträgt weniger als 10 μm. Der Platinkatalysator ist gleichmäßig in dem Protonen leitenden Ionomer dispergiert. Die Platinbeladung der Katalysatorschichten beträgt weniger als 0,35 mg/cm². Die Elektrodenschichten nach US 5,234,777 zeichnen sich durch eine homogene Verteilung des Katalysators im Ionomer aus.

Die US 5,084,144 beschreibt die Herstellung einer Gasdiffusionselektrode mit erhöhter Zahl von Dreiphasenzonen und damit verbesserter elektrokatalytischer Aktivität. Zur Herstellung der Gasdiffusionselektrode wird von einer Anordnung ausgegangen, die aus einer Schicht eines elektrisch leitfähigen Trägermaterials auf einer hydrophoben Gasverteilerstruktur besteht. Die Schicht wird mit einer Lösung eines Ionomers imprägniert und danach in ein galvanisches Bad mit Edelmetallionen eingebracht, die dann durch kurze Strompulse in Form von Kristalliten mit Durchmessern von weniger als 10 Nanometern abgeschieden werdeb. Gemäß dieser Patentschrift werden also die katalytisch aktiven Edelmetallpartikel nachträglich durch ein elektrochemisches Verfahren in die Katalysatorschicht eingebracht.

Ein weiteres Verfahren zur Herstellung einer Gasdiffusionselektrode wird in der DE 44 17 403 A1 beschrieben. Gemäß dieser Schrift wird zunächst ein flächiges Grundmaterial für eine Gasdiffusionselektrode aus einer Mischung eines Karbonpulvers und eines Fluor-Harz-Pulvers gebildet und bei 350°C kalziniert. Eine Seite des flächigen Grundmaterials wird mit einer Lösung eines Platingruppenmetallsalzes in einem komplexierenden organischen Lösungsmittel beschichtet und getrocknet. Anschließend wird dieses Gebilde erneut bei 250-380°C in einer Schutzgasatmosphäre kalziniert.

Aus US 2002/068213 A1 ist eine mehrschichtige mit Katalysator behaftete Elektrode bekannt, bei der auf einer ersten Katalysatorschicht mit einer bestimmten Dichte, eine weitere Katalysatorschicht angeordnet ist, deren Dichte nur 33 bis 50 % der Dichte der ersten Schicht aufweist. Die zweite Katalysatorschicht ist zur Kontaktierung mit einer Gasdiffusionsschicht vorgesehen.

Eine Brennstoffzelle mit einer mehrfachen Katalysatorschicht auf der Anodenseite ist auch in US 2009/0029235 A1 beschrieben. Dort weist die mehrlagige Katalysatorschicht zwei mit Katalysator behaftete Schichten sowie eine dazwischen angeordnete Schicht ohne Katalysator auf. Die Katalysatorbeladung der Schicht, die an die Anode grenzt ist dabei höher als die Katalysatorbeladung der Schicht, die an die Membran grenzt.

Aufgabe und Lösung

Aufgabe der vorliegenden Erfindung ist es, eine Katalysatorschicht für eine Brennstoffzelle bereitzustellen, welche, bezogen auf eine bestimmte Menge an eingesetztem Katalysator, eine optimierte elektrokatalytische Aktivität aufweist

Ferner ist es die Aufgabe der Erfindung, ein Verfahren bereitzustellen, mit dessen Hilfe eine solche Katalysatorschicht für eine Brennstoffzelle hergestellt werden kann.

Die Aufgaben der Erfindung werden gelöst durch ein Verfahren zur Herstellung einer Gasdiffusionselektrode sowie durch eine Brennstoffzelle gemäß Nebenanspruch. Vorteilhafte Ausgestaltungen der Brennstoffzelle sowie des Verfahrens ergeben sich aus den jeweils rückbezogenen Ansprüche.

Gegenstand der Erfindung

Die Erfindung basiert auf dem Grundgedanken einer Zwei-Lagen-Katalysatorschicht für eine Brennstoffzelle, mit einer ersten, sehr dünnen, aber hoch mit Katalysator beladenen Lage, die direkt für den Kontakt mit einer Elektrolytschicht (Membran) vorgesehen ist, sowie einer zweiten Lage, die benachbart zur ersten Lage, auf der der Elektrolyt abgewandten Seite der ersten Lage, angeordnet ist. Diese zweite Lage ist bezogen auf die erste Lage deutlich dicker ausgestaltet und weist eine wesentlich geringere Katalysatorbeladung auf. Beide Lagen zusammen ergeben eine Katalysatorschicht einer Brennstoffzelle, die entweder noch mit einer weiteren Gasdiffusionsschicht ergänzt wird, oder selbst ein Teil einer Membran-Elektroden-einheit (MEA) bildet.

Erfindungsgemäß beträgt die Schichtdicke der ersten Lage zwischen 5 % und 1 % der gesamten Schichtdicken der Katalysatorschicht.

Die erste Lage weist eine mehr als 50-fach, insbesondere eine mehr als 100-fach und besonders vorteilhaft eine mehr als 500-fach höhere Beladung an Katalysator auf als die zweite Lage.

Als Matrix für die Katalysatorteilchen in den beiden Lagen sind beispielsweise Kohlenstoffpartikel geeignet, wie sie auch in den Polymerelektrolyten eingesetzt werden.

Die Anordnung dieser zwei Lagen-Katalysatorschicht ist insbesondere für Brennstoffzellentypen mit einer Polymerelektrolyt-Membran geeignet, sei es für den Einsatz als Niedertemperatur-Brennstoffzelle (NT-PEM), beispielsweise einer Direkt-Methanol-Brennstoffzelle mit einer Betriebstemperatur unterhalb von 80 °C, oder als Hochtemperatur-Brennstoffzelle mit Betriebstemperaturen zwischen 130 °C und 200 °C.

Die Ausgestaltung der erfindungsgemäßen Zwei-Lagen Katalysatorschicht ist das Ergebnis einer mathematischen Modellierung einer Katalysatorschicht in einer Brennstoffzelle mit einer variablen Katalysatorbelegung entlang der Schichtdicke, mit dem Ziel einer optimierten Effektivität bezogen auf das eingesetzte Katalysatormaterial. Das der Erfindung zu Grunde liegende Modell ermittelt dabei bei vorgegebener Gesamtmenge an Katalysator für die gesamte Katalysatorschicht entlang der Schichtdicke die jeweils optimale Katalysatorbelegung.

Durch die besonders allgemein gehaltenen Rahmenbedingungen kann das Modell für die Ausgestaltung einer Katalysatorschicht auch auf andere Typen von Brennstoffzellen angewendet werden, das bedeutet, sowohl auf PEM-Brennstoffzellen (Polymer-Elektrolytmembran-Brennstoffzellen) und auf Direkt-Methanol-Brennstoffzellen als auch auf die Elektroden einer HT-PEM-Brennstoffzelle (HT = Hochtemperatur, bis ca. 200 °C).

Die optimierte Verteilung der Katalysatorbelegung entlang der Schichtdicke der Katalysatorschicht entspricht in erster Näherung einer Zwei-Lagen Struktur; einer ersten, sehr dünnen Lage mit einer sehr hohen Katalysatorbeladung, die an den Elektrolyten angrenzt, und einer zweiten, nur gering mit Katalysator beladenen Lage, die zusammen die gesamte Katalysatorschicht ausmachen.

Unter der Annahme, dass keine Transportverluste auftreten, ist der in der Brennstoffzelle produzierte Strom direkt proportional zu der aktiven Oberfläche des eingesetzten Katalysators. Das bedeutet, die Effektivität der Katalysatorschicht hängt lediglich von der Gesamtbeladung an Katalysator ab. Die elektro-chemische Reaktionsrate ist dabei über die gesamte Schichtdicke der Katalysatorschicht konstant.

In der Realität ist die Protonenleitfähigkeit innerhalb der Katalysatorschicht jedoch begrenzt. Dementsprechend ist die elektro-chemische Reaktionsrate dort am höchsten, wo der Aufwand für den Protonentransport am geringsten ist, das heißt an der Elektrolytoberfläche (Membranoberfläche). In diesem Fall ist der gesamte in der Katalysatorschicht erzeugte Strom proportional zur Quadratwurzel der Katalysatorbeladung. Mit anderen Worten, für eine Verdopplung des Zellstroms wäre eine vierfach höhere Katalysatorbeladung notwendig.

Allerdings hängt die Rate der Ladungsträgerproduktion bzw. des Ladungsträgerverbrauchs innerhalb der Katalysatorschicht exponentiell von der Überspannung ab. Daher kann eine aus Kostengründen erwünschte Reduzierung der Katalysatorbeladung in der Regel nur durch eine gleichzeitige Vergrößerung der Überspannung erfolgen. In den Katalysatorschichten liegen die Katalysatorteilchen in der Regel gleichmäßig verteilt über die Schichtdicke der Katalysatorschicht vor. In diesem Fall ist die auf Grund der geringen Protonenleitfähigkeit anwachsende Überspannung sehr groß, was nachteilig zu einem starken Absinken der Gesamtzellspannung führt. Ziel dieser Erfindung ist es, diese Überspannung zu reduzieren, indem die Katalysatorteilchen nicht gleichmäßig verteilt angeordnet werden.

Nachfolgend wird erläutert, wie dieses Ziel erreicht werden kann, indem eine besondere Kontur der Katalysatorbeladung entlang der Schichtdicke der Katalysatorschicht eingestellt wird. Qualitativ scheint es nachvollziehbar, dass an der Grenzfläche zur Elektrolytmembran, wo die höchste Umsetzungsrate erfolgt, eine höhere Beladung zwangsläufig zu einer Verbesserung der Umsetzung führt. Berechnungen mit diesem Modell haben gezeigt, dass die Leistung der gesamten Katalysatorschicht stark von dem Profil der Katalysatorbeladung entlang der Schichtdicke variiert, und das optimale Profil für eine optimale Leistung nicht durch einfaches Ausprobieren ermittelt werden kann.

Spezieller Beschreibungsteil

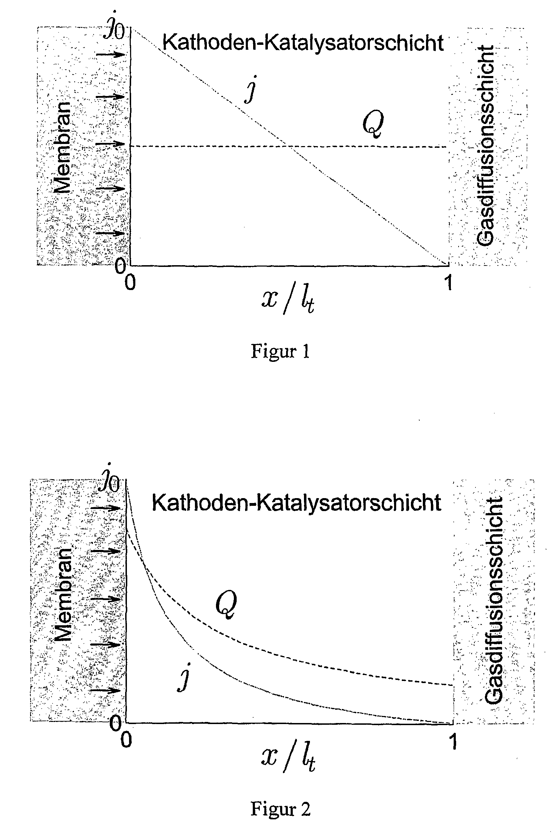

Mit Hilfe des hier nachfolgend dargestellten mathematischen Modells, verdeutlicht anhand dreier Figuren, konnte jedoch eine Lösung für ein optimales Profil als Basis für die Erfindung gefunden werden. Die Figuren 1 bis 3 zeigen:

Figur 1: Das Profil der Protonen Stromdichte j und die Reaktionsgeschwindigkeit Q über die kathodenseitige normierte Katalysatorschicht $x/l_t$ einer PEM-Brennstoffzelle oder einer Direkt-Methanol-Brennstoffzelle. Die Polarisationsspannung der Katalysatorschicht ist gering, da alle Katalysatorteilchen in der Katalysatorschicht gleichermaßen zur Protonenstromumwandlung beitragen.

Figur 2: Das Profil der Protonen Stromdichte j und die Reaktionsgeschwindigkeit Q über die kathodenseitige normierte Katalysatorschicht $x/l_t$ einer PEM-Brennstoffzelle oder einer Direkt-Methanol-Brennstoffzelle mit niedriger Protonenleitfähigkeit. Der größte Teil des Protonenstroms wird in der Nähe der Membrangrenzfläche umgewandelt, was zu einer hohen Polarisationsspannung, und damit zu einem Spannungsverlust führt.

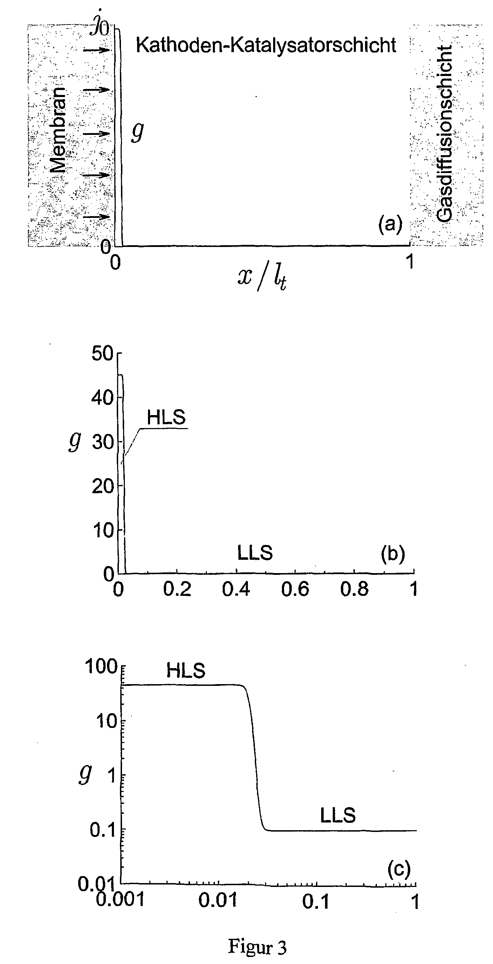

Figur 3: Die Katalysator-Beladung g einer Zwei-Lagen Katalysatorschicht gegen die normierte Schicht $x/l_t$: (a) in linearen Koordinaten, (b) in halb-logarithmischer Auftragung und (c) in einer log-log Auftragung.

In der Theorie kann die Katalysatorschicht einer PEM-Brennstoffzelle oder einer Direkt-Methanol-Brennstoffzelle mit idealem Sauerstofftransport in einem von zwei Betriebszuständen betrieben werden: im Niederstrombereich oder im Hochstrombereich.

Der Betriebszustand, in dem die Katalysatorschicht betrieben wird, hängt dabei von dem Wert der charakteristischen Stromdichte ab

$$j_* = \sqrt{2i_* s\, b} \qquad\qquad (1)$$

mit i* = Austauschstromdichte, s = Protonenleitfähigkeit der Katalysatorschicht und b = Steigung in der logarithmischen Strom-Spannungs-Kurve nach Tafel für die Sauerstoffreduktionsreaktion. Mit $j_0$ wird die Stromdichte der Brennstoffzelle bezeichnet. Sofern $j_0 \ll j^*$ ist, arbeitete die Katalysatorschicht im Niederstrombereich; wenn $j_0 \gg j^*$ ist, arbeitete die Katalysatorschicht im Hochstrombereich.

Im Niederstrombereich ist die Verteilung der Protonen-Stromdichte j(x) über die aktive Katalysatorschicht in der Regel linear (siehe Figur 1). Das bedeutet, dass die Umsetzungsrate der elektrochemischen Reaktion Q über die Schichtdicke der Katalysatorschicht konstant ist. Physikalisch gesehen, wird dieser Bereich dann erreicht, wenn die Protonenleitfähigkeit der Polymerelektrolytphase in der Katalysatorschicht derart hoch ist, dass der Protonentransport keinen Beitrag zum Spannungsverlust liefert.

Sofern die charakteristische Stromdichte j* gering ist, so dass die Ungleichung $j_0 \gg j^*$ erfüllt ist, arbeitete die Brennstoffzelle im Hochstrombereich. In diesem Bereich verläuft das Profil des lokalen Protonenstroms nicht linear über die Schichtdicke der Katalysatorschicht (siehe Figur 2). Die Umsetzungsrate der Sauerstoffreduktionsreaktion ist an der Grenzfläche zwischen Katalysatorschicht und Elektrolytmembran am höchsten. Die Protonen können auf Grund der geringen Protonenleitfähigkeit nicht weit in die Katalysatorschicht einwandern und daher findet die Protonenumwandlung hauptsächlich an der Membranoberfläche zur Katalysatorschicht statt.

Die mathematische Lösung für eine kathodische Katalysatorschicht mit einer gleichförmigen Verteilung des Katalysators über die Schichtdicke zeigt für diesen Fall eine erhöhte Polarisationsspannung an.

Auf der anderen Seite können aber die Spannungsverluste im Hochstrombereich durch eine nicht konstante Verteilung des Katalysators deutlich verringert werden. Eine Simulation mit sehr unterschiedlichen Stromdichten $j_0$ und sonst identischen Bedingungen führte zu einer Verringerung der Spannungsverluste in der Größenordnung von 100 bis 150 mV. Typische Spannungsverluste liegen üblicherweise zwischen 300 und 500 mV.

Aus der Modellberechnung ergibt sich die optimale Verteilung des Katalysators über die normierte Schichtdicke $x/l_t$ der Katalysatorschicht aus:

$$g(x) = 0.1 + \frac{45}{2}\left(1 - \tanh\left(\frac{x - 0.02}{0.002}\right)\right) \qquad (2)$$

Diese Funktion nähert sich einer Zwei-Lagen Anordnung einer Katalysatorschicht an. Nahe an der Elektrolytmembran befindet sich eine erste Lage mit einer hohen Katalysatorbeladung (HLS = high loaded sub-layer). Diese entspricht ca. dem 45-fachen der Normalbeladung, wobei die Normalbeladung wie folgt definiert ist: $g_{norm}(x) = 1$. Die Schichtdicke dieser hochbeladenen Lage entspricht dabei nur ca. 2 % der gesamten Schichtdicke der Katalysatorschicht. An die erste Lage schließt sich eine zweite Lage mit einer geringen Katalysatorbeladung an (LLS = low loaded sub-layer), die bei ca. 0,1 der Normalbeladung liegt Die Schichtdicke dieser niedrig beladenen Lage entspricht dabei ca. 98 % der gesamten Schichtdicke der Katalysatorschicht (siehe Figur 3).

Physikalisch lässt sich diese deutliche Leistungssteigerung der erfindungsgemäßen Zwei-Lagen Katalysatorschicht wie folgt erklären. Die charakteristische Stromdichte $j_*^{HLS}$ der hochbeladenen Lage ist $\sqrt{45}$, d. h. ca. 7 mal höher als die charakteristische Stromdichte j* für eine gleichförmig beladene Katalysatorschicht. Daher ist für diese Lage die Bedingung $j_0 \leq j_*^{HLS}$ erfüllt. Auf Grund der hohen Katalysatorbeladung in dieser Lage kann dieser Bereich der membrannahen Katalysatorschicht vorteilhaft im Niedrigstrombereich arbeiten und sehr effektiv den größten Anteil des Protonenstroms umsetzen. Gleichzeitig verringert sich der in die zweite Lage eintretende Protonenstrom derart, dass nunmehr auch die zweite Lage der Katalysatorschicht im Niedrigstrombereich arbeiten kann. In der Summe treten daher in dieser Zwei-Lagen Katalysatorschicht nur sehr geringe Spannungsverluste verglichen mit einer gleichförmig beladenen Katalysatorschicht auf.

Es hat sich daher herausgestellt, dass zur Erzielung einer deutlich verbesserten Katalysatorschicht, erfindungsgemäß diese eine erste dünnere, aber hoch beladene Schicht (HLS), und eine zweite dickere, aber nur wenig beladene Schicht (LLS), aufweist. Erfindungsgemäß beträgt die Beladung der HLS-Schicht mit Katalysator wenigstens das 10-fache der LLS-Schicht, und die Schichtdicke der LLS-Schicht beträgt wenigstens das 10-fache der Schichtdicke der HLS-Schicht.

Beim Verfahren zur Herstellung einer erfindungsgemäßen Katalysatorschicht kann diese prinzipiell sowohl auf eine Elektrolytmembran aufgebracht werden, um in einem weiteren Schritt mit einer Gasdiffusionsschicht verbunden zu werden, oder aber auch zunächst auf eine Gasdiffusionsschicht aufgebracht werden, um in einem späteren Schritt mit einer Membran verbunden zu werden.

Zum Auftragen der Zwei-Lagen Katalysatorschicht auf eine entsprechende Unterlage bieten sich herkömmliche Verfahren wie Rakeln oder auch Sprühverfahren an. Soll die Katalysatorschicht auf eine Elektrolytmembran aufgebracht werden, so sieht der erste Verfahrensschritt vor, eine sehr dünne, aber hoch beladene Katalysatorschicht aufzubringen. In einem zweiten Schritt wird anschließend eine dickere, dafür aber nur sehr gering beladene Katalysatorschicht auf die erste Schicht aufgebracht.

1. Ausführungsbeispiel:

Auf eine Nafion™-Membran wird zunächst eine dünne, ca. 1 bis 2 $\mu$m dicke Schicht aus geträgerten Pt-Partikeln aufgebracht. Dazu wird eine Mischung aus Isopropanol, Pt-Katalysator und Nafion™ eingesetzt. Die Beladung sollte dabei so hoch wie möglich sein. Bei Probebeschichtungen konnten Beladungen von beispielsweise 2 bis 4 mg Pt-Katalysator/cm$^2$ Membranfläche realisiert werden. Die Schichtdicke der dünnen, hochbeladenen Katalysatorschicht betrug dabei ca. 1 bis 2 $\mu$m.

Die dickere Katalysatorschicht mit einer Schichtdicke zwischen 10 und 20 $\mu$m wurde auf einem Kohlenstoffpapier (Toray E-TEC carbon paper) aufgebracht. Dieses Kohlenstoffpapier fungiert in einer Brennstoffzelle gleichzeitig als Gasdiffusionsschicht (GDL). In diesem Fall wurde jeweils geträgerter Pt-Katalysator (Volcan XC-72) eingesetzt. Es wurde jeweils eine Beladung von ca. 0,01 mg Katalysator/cm$^2$ eingestellt.

Im Anschluss wurde das mit Pt-Katalysator beladene Kohlenstoffpapier auf die ebenfalls mit Pt-Katalysator beladene Nafion™-Membran bei Temperaturen um 130 °C durch Druck aufgepresst. Typische Drücke für diese Art der Verbindung liegen zwischen 0,2 und 2,0 kN/cm$^2$, insbesondere um 0,5 kN/cm$^2$. Typische Temperaturen liegen zwischen 110 und 150 °C.

2. Ausführungsbeispiel

Auf ein Kohlenstoffpapier (Toray E-TEC carbon cloth) wurde zunächst eine dicke, niedrig beladene Katalysatorschicht mit einer Schichtdicke zwischen 10 bis 20 $\mu$m aufgebracht. Dazu wird eine Mischung aus Isopropanol, Pt-Katalysator und Nafion™ eingesetzt. Als Katalysator wurden geträgerte Pt-Partikel (Volcan XC-72) verwendet. Es wurde jeweils eine Beladung von ca. 0,01 mg Katalysator/cm$^2$ eingestellt.

Im Anschluss daran wurde auf die dicke Katalysatorschicht die dünne, hoch beladene Katalysatorschicht aufgebracht. Die Beladung sollte dabei so hoch wie möglich sein. Bei Probebeschichtungen konnten Beladungen von beispielsweise 2 bis 4 mg Pt-Katalysator/cm$^2$ realisiert werden. Die Schichtdicke der dünnen, hochbeladenen Katalysatorschicht betrug dabei ca. 1 bis 2 $\mu$m. Durch die Beschichtung des Kohlenstoffpapiers als Gasdiffusionsschicht mit dem Katalysator entsteht somit eine Gasdiffusionselektrode.

Im Anschluss wurde das Kohlenstoffpapier mit den darauf aufgebrachten zwei Katalysatorschichten bei Temperaturen um 130 °C unter Druck auf eine Nafion™-Membran aufgepresst. Typische Drücke für diese Art der Verbindung liegen zwischen 0,2 und 2,0 kN/cm$^2$, insbesondere um 0,5 kN/cm$^2$. Typische Temperaturen liegen zwischen 110 und 150 °C.

Die übliche Schichtdicke von Katalysatorschichten aus dem Stand der Technik beträgt für PEM-Brennstoffzellen circa. 10 $\mu$m und für Direkt-Methanol-Brennstoffzellen cirka 100 $\mu$m. Die erfindungsgemäße zweiteilige Katalysatorschicht weist im Unterschied zu den aus dem Stand der Technik bekannten Katalysatorschichten bei gleichem Katalysatoreinsatz eine verbesserte Umsetzungsrate auf, insbesondere da Spannungsverluste regelmäßig deutlich verringert werden.

**Patentansprüche**

1. Anordnung einer Katalysatorschicht in einer Gasdiffusionselektrode, **dadurch gekennzeichnet, dass**

- auf einer Gasdiffusionsschicht eine erste Katalysatorschicht mit einer Schichtdicke von > 5 $\mu$m und einer Katalysatorbeladung von < 0,1 mg/cm$^2$ und auf dieser eine zweite Katalysatorschicht mit einer Schichtdicke von < 5 $\mu$m und einer Katalysatorbeladung von > 1 mg/cm$^2$ angeordnet ist,
- wobei die Schichtdicke der zweiten Schicht zwischen 5 % und 1 % der gesamten Schichtdicke der Katalysatorschicht ausmacht, und
- wobei die Katalysatorbeladung der zweiten ersten Schicht eine mehr als 50-fache Beladung an Katalysator als die erste Schicht aufweist.

2. Anordnung nach Anspruch 1, wobei die Katalysatorbeladung der zweiten Schicht eine mehr als 100-fache Beladung an Katalysator als die erste Schicht aufweist.

3. Anordnung nach Anspruch 1 oder 2, mit einer ersten Katalysatorschicht mit einer Katalysatorbeladung von < 0,05

mg/cm$^2$, vorteilhaft sogar mit einer Katalysatorbeladung um 0,01 mg/cm$^2$.

4.  Anordnung nach Anspruch 1 bis 3, mit einer zweiten Katalysatorschicht mit einer Katalysatorbeladung von > 2 mg/cm$^2$, vorteilhaft sogar mit einer Katalysatorbeladung zwischen 2 und 4 mg/cm$^2$.

5.  Anordnung nach Anspruch 1 bis 41, mit einer ersten Katalysatorschicht mit einer Schichtdicke von > 10 $\mu$m, vorteilhaft mit einer Schichtdicke zwischen 10 und 20 $\mu$m.

6.  Anordnung nach Anspruch 1 bis 5, mit einer zweiten Katalysatorschicht mit einer Schichtdicke von < 2 $\mu$m, vorteilhaft mit einer Schichtdicke zwischen 1 und 2 $\mu$m.

7.  Anordnung nach Anspruch 1 bis 6, mit Pt-Partikel als Katalysator.

8.  Verfahren zur Herstellung einer Gasdiffusionselektrode mit den Schritten

    - auf eine Gasdiffusionsschicht wird eine erste Katalysatorschicht mit einer Schichtdicke von > 5 $\mu$m und einer Katalysatorbeladung von < 0,1 mg/cm$^2$ aufgebracht,
    - auf die erste Katalysatorschicht wird eine zweite Katalysatorschicht mit einer Schichtdicke von < 5 $\mu$m und einer Katalysatorbeladung von > 1 mg/cm$^2$ aufgebracht,
    - wobei die Schichtdicke der zweiten Schicht zwischen 5% und 1% der gesamten Schichtdicke der Katalysatorschicht ausmacht, und
    - wobei die Katalysatorbeladung der zweiten Schicht eine mehr als 50-fache Beladung an Katalysator als die zweite Schicht aufweist.

9.  Verfahren zur Herstellung einer Gasdiffusionselektrode mit den Schritten

    - auf eine Gasdiffusionsschicht wird eine erste Katalysatorschicht mit einer Schichtdicke von > 5 $\mu$m und einer Katalysatorbeladung von < 0,1 mg/cm$^2$ aufgebracht,
    - auf eine Polymermembran wird eine zweite Katalysatorschicht mit einer Schichtdicke von < 5 $\mu$m und einer Katalysatorbeladung von > 1 mg/cm$^2$ aufgebracht,
    - so dass die Schichtdicke der zweiten Katalysatorschicht zwischen 5% und 1 % der gesamten Schichtdicke der Katalysatorschicht ausmacht, und
    - wobei die Katalysatorbeladung der zweiten Katalysatorschicht eine mehr als 50-fache Beladung an Katalysator als die zweite Katalysatorschicht aufweist.
    - die mit Katalysator beschichtete Gasdiffusionsschicht wird bei Temperaturen zwischen 110 und 150 °C und einem Druck derart auf die mit Katalysator beschichtete Polymermembran aufgepresst, dass die beiden Katalysatorsschichten benachbart angeordnet sind.

10. Verfahren nach einem der Ansprüche 8 oder 9, bei dem die erste Katalysatorschicht mit einer Katalysatorbeladung von < 0,05 mg/cm$^2$, vorteilhaft sogar mit einer Katalysatorbeladung um 0,01 mg/cm$^2$ aufgebracht wird.

11. Verfahren nach einem der Ansprüche 8 bis 10, bei dem die zweite Katalysatorschicht mit einer Katalysatorbeladung von > 2 mg/cm$^2$, vorteilhaft zwischen 2 und 4 mg/cm$^2$ aufgebracht wird.

12. Verfahren nach einem der Ansprüche 8 bis 11, bei dem die erste Katalysatorschicht mit einer Schichtdicke von > 10 $\mu$m, vorteilhaft zwischen 10 und 20 $\mu$m aufgebracht wird.

13. Verfahren nach einem der Ansprüche 8 bis 12, bei dem die zweite Katalysatorschicht mit einer Schichtdicke von < 2 $\mu$m, vorteilhaft sogar mit einer Schichtdicke zwischen 1 und 2 $\mu$m aufgebracht wird.

14. Verfahren einem der Ansprüche 8 bis 13, bei dem Platin als Katalysator eingesetzt wird.

**Claims**

1.  Arrangement of a catalyst layer in a gas diffusion electrode, **characterised in that**:

    - a first catalyst layer with a layer thickness of > 5 $\mu$m and a catalyst loading of < 0.1 mg/cm$^2$ is arranged on a gas diffusion layer, and arranged on said first catalyst layer is a second catalyst layer with a layer thickness of < 5 $\mu$m and a catalyst loading of > 1 mg/cm$^2$,

- wherein the layer thickness of the second layer makes up between 6 % and 1 % of the entire layer thickness of the catalyst layer, and
- wherein the catalyst loading of the second layer has more than 50 times the loading of catalyst of the first layer.

2. Arrangement according to claim 1, wherein the catalyst loading of the second layer has more than 100 times the loading of catalyst of the first layer.

3. Arrangement according to claim 1 or 2, with a first catalyst layer with a catalyst loading of < 0.05 mg/cm2, advantageously with a catalyst loading of 0.01 mg/cm2.

4. Arrangement according to claims 1 to 3, with a second catalyst layer with a catalyst loading of > 2 mg/cm2, advantageously with a catalyst loading of between 2 and 4 mg/cm2.

5. Arrangement according to claims 1 to 41 *[sic],* with a first catalyst layer with a layer thickness of > 10 $\mu$m, advantageously with a layer thickness of between 10 and 20 $\mu$m.

6. Arrangement according to claim 1 to 5, with a second catalyst layer with a layer thickness of <2 $\mu$m, advantageously with a layer thickness of between 1 and 2 $\mu$m.

7. Arrangement according to claim 1 to 6, with Pt particles as catalyst.

8. Method for producing a gas diffusion electrode comprising the steps:

- a first catalyst layer with a layer thickness of > 5 $\mu$m and a catalyst loading of < 0.1 mg/cm2 is applied to a gas diffusion layer,
- a second catalyst layer with a layer thickness of < 5 $\mu$m and a catalyst loading of > 1 mg/cm2 is applied to the first catalyst layer,
- wherein the layer thickness of the second layer makes up between 5% and 1% of the entire layer thickness of the catalyst layer, and
- wherein the catalyst loading of the second layer has more than 50 times the loading of catalyst of the first layer.

9. Method for producing a gas diffusion electrode comprising the steps:

- a first catalyst layer with a layer thickness of > 5 $\mu$m and a catalyst loading of < 0.1 mg/cm2 is applied to a gas diffusion layer,
- a second catalyst layer with a layer thickness of < 5 pm and a catalyst loading of > 1 mg/cm2 is applied to a polymer membrane,
- so that the layer thickness of the second catalyst layer makes up between 5% and 1% of the entire layer thickness of the catalyst layer, and
- wherein the catalyst loading of the second layer has more than 50 times the loading of catalyst of the first layer
- the gas diffusion layer coated with catalyst is pressed onto polymer membrane coated with catalyst at temperatures between 110 and 150 °C and under pressure in such a way that the two catalyst layers are arranged adjacent to one another.

10. Method according to one of the claims 8 or 9, in which the first catalyst layer is applied with a catalyst loading of < 0.05 mg/cm$^2$, advantageously with a catalyst loading of around 0.01 mg/cm$^2$.

11. Method according to one of the claims 8 to 10, in which the second catalyst layer is applied with a catalyst loading of > 2 mg/cm$^2$, advantageously of between 2 and 4 mg/cm$^2$.

12. Method according to one of the claims 8 to 11, in which the first catalyst layer is applied with a layer thickness of > 10 $\mu$m, advantageously of between 10 and 20 $\mu$m.

13. Method according to one of the claims 8 to 12, in which the second catalyst layer is applied with a layer thickness of < 2 $\mu$m, advantageously with a layer thickness of between 1 and 2 $\mu$m.

**14.** Method according to one of the claims 8 to 13, in which platinum is used as catalyst.

**Revendications**

**1.** Agencement d'une couche de catalyseur dans une électrode à diffusion de gaz, **caractérisé en ce**

- **que** sont disposées, sur une couche à diffusion de gaz, une première couche de catalyseur présentant une épaisseur de couche > 5 $\mu$m et une charge de catalyseur < 0,1 mg/cm$^2$ et, sur cette dernière, une deuxième couche de catalyseur présentant une épaisseur de couche < 5 $\mu$m et une charge de catalyseur > 1 mg/cm$^2$,
- dans lequel l'épaisseur de couche de la deuxième couche représente entre 5 % et 1 % de l'ensemble de l'épaisseur de couche de la couche de catalyseur, et
- dans lequel la charge de catalyseur de la deuxième première couche présente une charge sur le catalyseur égale à plus de 50 fois celle de la première couche.

**2.** Agencement selon la revendication 1, dans lequel la charge de catalyseur de la deuxième couche présente une charge sur le catalyseur égale à plus de 100 fois celle de la première couche.

**3.** Agencement selon la revendication 1 ou 2, comprenant une première couche de catalyseur comprenant une charge de catalyseur < 0,05 mg/cm$^2$, voire de manière avantageuse comprenant une charge de catalyseur de 0,01 mg/cm$^2$.

**4.** Agencement selon la revendication 1 à 3, comprenant une deuxième couche de catalyseur comprenant une charge de catalyseur > 2 mg/cm$^2$, voire de manière avantageuse comprenant une charge de catalyseur comprise entre 2 et 4 mg/cm$^2$.

**5.** Agencement selon la revendication 1 à 41, comprenant une première couche de catalyseur comprenant une épaisseur de couche > 10 $\mu$m, de manière avantageuse comprenant une épaisseur de couche comprise entre 10 et 20 $\mu$m.

**6.** Agencement selon la revendication 1 à 5, comprenant une deuxième couche de catalyseur comprenant une épaisseur de couche < 2 $\mu$m, de manière avantageuse comprenant une épaisseur de couche comprise entre 1 et 2 $\mu$m.

**7.** Agencement selon la revendication 1 à 6, comprenant des particules Pt en tant que catalyseur.

**8.** Procédé pour fabriquer une électrode à diffusion de gaz, comprenant les étapes suivantes

- une première couche de catalyseur présentant une épaisseur de couche > 5 $\mu$m et une charge de catalyseur < 0,1 mg/cm$^2$ est appliquée sur une couche à diffusion de gaz,
- une deuxième couche de catalyseur présentant une épaisseur de couche < 5 $\mu$m et une charge de catalyseur > 1 mg/cm$^2$ est appliquée sur la première couche de catalyseur,
- dans lequel l'épaisseur de couche de la deuxième couche représente entre 5 % et 1 % de l'ensemble de l'épaisseur de couche de la couche de catalyseur, et
- dans lequel la charge de catalyseur de la deuxième couche présente une charge sur le catalyseur égale à plus de 50 fois celle de la deuxième couche.

**9.** Procédé pour fabriquer une électrode à diffusion de gaz comprenant les étapes suivantes

- une première couche de catalyseur présentant une épaisseur de couche > 5 $\mu$m et une charge de catalyseur < 0,1 mg/cm$^2$ est appliquée sur une couche à diffusion de gaz,
- une deuxième couche de catalyseur présentant une épaisseur de couche < 5 $\mu$m et une charge de catalyseur > 1 mg/cm$^2$ est appliquée sur une membrane polymère,
- de sorte que l'épaisseur de couche de la deuxième couche de catalyseur représente entre 5 % et 1 % de l'ensemble de l'épaisseur de couche de la couche de catalyseur, et
- dans lequel la charge de catalyseur de la deuxième couche de catalyseur présente une charge sur le catalyseur égale à plus de 50 fois celle de la deuxième couche de catalyseur,
- la couche à diffusion de gaz revêtue du catalyseur est pressée sur la membrane polymère revêtue du catalyseur à des températures comprises entre 110 et 150 °C et à une pression donnée de telle manière que les deux couches de catalyseur sont disposées de manière adjacente.

**10.** Procédé selon l'une quelconque des revendications 8 ou 9, dans le cadre duquel la première couche de catalyseur est appliquée avec une charge de catalyseur < 0,05 mg/cm$^2$, voire de manière avantageuse avec une charge de catalyseur de 0,01 mg/cm$^2$.

**11.** Procédé selon l'une quelconque des revendications 8 à 10, dans le cadre duquel la deuxième couche de catalyseur est appliquée avec une charge de catalyseur > 2 mg/cm$^2$, de manière avantageuse comprise entre 2 et 4 mg/cm$^2$.

**12.** Procédé selon l'une quelconque des revendications 8 à 11, dans le cadre duquel la première couche de catalyseur est appliquée avec une première épaisseur de couche > 10 $\mu$m, de manière avantageuse comprise entre 10 et 20 $\mu$m.

**13.** Procédé selon l'une quelconque des revendications 8 à 12, dans le cadre duquel la deuxième couche de catalyseur est appliquée avec une épaisseur de couche < 2 $\mu$m, voire de manière avantageuse avec une épaisseur de couche comprise entre 1 et 2 $\mu$m.

**14.** Procédé selon l'une quelconque des revendications 8 à 13, dans le cadre duquel du platine est utilisé en tant que catalyseur.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4876115 A
- US 5234777 A
- US 5084144 A
- DE 4417403 A1
- US 2002068213 A1
- US 20090029235 A1